# EUROPÄISCHE PATENTANMELDUNG

(11) **EP 1 798 673 A1**
(43) Veröffentlichungstag der Anmeldung: **20.06.2007**
(21) Anmeldenummer: 05025546.2
(22) Anmeldetag: 23.11.2005
(51) Int. Cl.: G06Q 10/00, G06Q 40/00, G06F 17/24

(54) **Computer-implementiertes System zur Erzeugung, Bearbeitung und Verwaltung von strukturierten Datensätzen**

(71) Anmelder: UBS AG, 8001 Zürich (CH)
(72) Erfinder: Bank, Marcel, 5452 Oberrohrdorf (CH); Engel, Michael, CH-8055 Zürich (CH)
(74) Vertreter: Schmidt, Steffen J.

(57) **Zusammenfassung**

Ein System zur Datenverwaltung hat einen Basisleistungskonfigurator, um eine generische Basisleistung zu definieren, wobei zu erbringende Leistung in eine Basisleistung abzubilden ist mittels beschreibender Attribute und zugehörigen, für die Verarbeitung der Basisleistung notwendigen Werten oder Wertebereichen. Die Leistung ist auf einen Datensatz abzubilden, dem eine Abgaberegel zugeordnet ist. Ein Datensatz definiert mit den jeweiligen zugeordneten Abgaberegeln eine generische Basisleistung. In einem Basisleistungsverzeichnis sind die die generischen Basisleistungen definierenden Datensätze mit ihren Abgaberegeln für einen Zugriff eines Produktvorlagenkonfigurators abgelegt. Der Produktvorlagenkonfigurator kombiniert eine oder mehrere Basisleistungen und überführt sie in eine Produktvorlage, indem die generischen Basisleistungen durch Übernehmen oder Einschränken der Werte zu spezifischen Basisleistungen für die jeweilige Produktvorlage mutiert werden. Eine Produktvorlage umfasst eine oder mehrere zu einem Produkt gehörende Basisleistungen. Eine Produktvorlage mit spezifischen Basisleistungen dient als Grundlage für eine Vertragsbeziehung mit einem Partner. In einem Produktvorlagenverzeichnis ist die Struktur der Produktvorlagen zum Zugriff eines Vertragsmanagers abgelegt.

## Beschreibung

### Hintergrund der Erfindung

In vielen Unternehmen, aber auch in Behörden, fallen heutzutage im Zusammenhang mit der Erbringung von Dienstleistungen, Etablierung und Durchführung von Geschäftsbeziehungen, oder bei der Ausübung staatlicher Aufgaben riesige Datenmengen an. Dabei ist eine strukturierte und systematische datentechnische Definition, Erzeugung, Bearbeitung, Verwaltung, und Darstellung der erbrachten Dienstleistungen, eingegangenen Geschäftsbeziehungen oder dergl. erforderlich. Nur so können jederzeit Hintergründe und Einzelheiten der mit dem Datenanfall verbundenen Vorgänge nachvollzogen werden.

Ein Beispiel eines Dienstleistungserbringers sind Banken. Im Bankgeschäft zeigt sich in den letzten Jahren und sogar Jahrzehnten eine zunehmende Ausdifferenzierung der angebotenen Dienstleistungen und Preise. Frühere Einheitsdienstleistungen (Konto, Depot, etc.) mit wenigen Varianten werden durch eine zunehmend größere Anzahl unterschiedlicher Dienstleistungen und Preisalternativen ersetzt. Die Palette der angebotenen Finanzinstrumente wird stetig breiter und die einzelnen Finanzinstrumente kundenorientierter und diffiziler.

Gleichzeitig steigen seitens der Kunden/Partner einerseits und der internen Auditoren und der offiziellen Stellen (Aufsichtsbehörden, etc.) andererseits die Ansprüche an die Dienstleistungserbringer hinsichtlich Transparenz, Konsistenz und Vollständigkeit der Daten/Informationen, die dem Kunden/Partner von dem Dienstleistungserbringer bereitgestellt werden und die im Zusammenhang mit der Geschäftsbeziehung erzeugt und archiviert werden.

Wenn zum Beispiel in einer Bank ein 'Produkt' an einen Kunden/Partner verkauft wird, findet ein Abschluss eines Vertrages statt. Mit dem Vertrag werden die Vereinbarungen zwischen Bank und Kunden/Partner festgehalten; das heißt, welche Rechte und Pflichten einerseits die Bank, und andererseits der Kunde/Partner haben. Dabei werden nebst den Grundinformationen vor allem die individuellen Ausprägungen des Produktes aufgenommen.

### Der Erfindung zugrunde liegende Probleme

Ein Problem mit der Erzeugung, Bearbeitung und Verwaltung von strukturierten Datensätzen, wie sie zum Beispiel Verträge zwischen Bankkunden und einer Bank bilden, besteht darin, dass die Bank einerseits möglichst viele gleichförmige Produkte in ihrem Sortiment haben will, andererseits aber auf Kunden-/Partnerwünsche eingehen will/ muss. Dabei ist vermehrt dem Umstand Rechnung zu tragen, dass Kundenberater nicht immer über alle Möglichkeiten, aber auch Beschränkungen, unterrichtet sind, die im Zusammenhang mit einem Produkt von Bedeutung sein könnten. Dazu kommt, dass die bankfachliche Überprüfung von 'individuell' vereinbarten Verträgen einen sehr hohen Aufwand mit sich bringen kann.

Ein anderes Problem besteht darin, dass sich der bei herkömmlicher Definition, Erzeugung, Bearbeitung und Verwaltung von Produkten/Verträgen/Dienstleistungen ergebende Datenhaltungsaufwand erheblich steigert, da sich die individuellen Vereinbarungen nur schwer in verständlicher, aber gleichzeitig kompakter Form ablegen lassen.

Weiterhin ist die Typisierung von Produkten/Verträgen/Dienstleistungen sowie deren Behandlung bei der herkömmlichen Vorgehensweise sehr erschwert, was sich in gesteigertem Datenverkehr und in einer erhöhten Fehleranfälligkeit mit dem damit verbundenen Mehraufwand niederschlägt.

Schließlich dauert die Entwicklung neuer Produkte bei der herkömmlichen Vorgehensweise relativ lange. Dies ist insbesondere den gestiegenen Anforderungen an die Übereinstimmung mit gesetzlichen Vorgaben, aber dem erhöhten Realisierungs- und Testaufwand im heutigen komplexen IT-Umfeld derartiger Dienstleistungserbringer, zum Beispiel von Banken oder anderen Organisationen geschuldet.

### Aufgabe der Erfindung

Aufgabe der Erfindung ist es, einen Weg aufzuzeigen, wie für eine Vielzahl unterschiedlicher Arten von Produkten eines Dienstleistungserbringers, zum Beispiel einer Bank oder anderen Organisation, eine strukturierte und systematische Definition, Erzeugung, Bearbeitung und Verwaltung von strukturierten Datensätzen, wie sie die Dienstleistungen und 'Produkte' einer Bank wiedergeben, auf die Ebene der elektronischen Daten ermöglicht werden kann.

### Erfindungsgemäße Lösung

Zur Lösung dieser Aufgabe ist erfindungsgemäß eine Computersoftwareprogramm-Komponente Vertragsmanager vorgesehen, um aus einem Produktvorlagenverzeichnis, in dem die Strukturen der Produktvorlagen in strukturierter Weise abgelegt sind, eine Produktvorlage zur Individualisierung aufzurufen und spezifisch zu ergänzen, indem entweder wenigstens ein vorgesetzter Wert zu übernehmen ist oder ein Wert innerhalb eines zugelassenen Bereiches auszuwählen ist, um ein einen Vertrag wiedergebendes individualisiertes Vertragsdokument zu erzeugen und das Anlegen dieses Vertrages in einer Datenbank und dessen technische Abwicklung anzustoßen. Dabei weist der Vertrag einen Vertragskopf und wenigstens eine Basisleistung auf, die aus der Produktvorlage abgeleitet sind. Aus jeder in den Vertrag aufgenommenen Basisleistung wird ein Basisleistungsvertrag abgeleitet, von dem einem jeweiligen Basisleistungs-Produzenten vorbestimmte Basisleistungsvertragsdaten übermittelt werden. Bei Produzenten mit eigener Datenhaltung werden im Vertrag die Basisleistungsvertragsdaten als Schlüssel geführt und bei Produzenten ohne eigene Datenhaltung werden diese Basisleistungsvertragsdaten im Vertrag abgelegt. Die Softwareprogramm-Komponente Vertrag stellt Funktionalitäten zur Bewirtschaftung der Vertragsdaten zur Verfügung und führt und verwaltet alle Kunden-/Partner-relevanten Kunden-Verträge.

Mit anderen Worten sieht die Erfindung vor, dass einem Vertrag eine Produktvorlage zugrunde liegt, die der Kundenberater im Gespräch mit dem Kunden/Partner spezifisch ergänzt. Dabei wird entweder der vorgesetzte Wert (Default) übernommen oder ein Wert innerhalb des zugelassenen Bereiches kunden-/partnerindividuell ausgewählt. Der Abschluss des Vertrages, also der Verkauf eines Produktes, löst auf Seiten des Dienstleistungserbringers (der Bank) zwei Hauptaktivitäten aus. Einerseits wird ein physisches Vertragsdokument erzeugt, das in der Regel beidseitig unterzeichnet und dem Kunden/Partner ausgehändigt wird. Anderseits wird das Anlegen eines Vertrages in der (bank-)internen Datenverarbeitung und die technische Abwicklung des Vertrages angestoßen.

Erfindungsgemäß besteht der Vertrag aus einem Vertragskopf und wenigstens einer Basisleistung. Grundlage für den Vertrag ist die ausgefüllte Produktvorlage, d.h. das verkaufte Produkt. Aus der Produktvorlage wird der Vertragskopf abgeleitet und aus jeder in den Vertrag aufgenommenen Basisleistung ergibt sich ein Basisleistungsvertrag. Die Basisleistungen können unterschiedliche Herkunft haben. Je nach Herkunft der Basisleistung, das heißt abhängig davon, wer der Basisleistungs-Produzent ist, werden unterschiedliche Basisleistungsvertragsdaten im Vertrag gehalten. Basisleistungen vom bestimmten Produzenten mit eigener Datenhaltung werden im Vertrag nur als Schlüssel geführt. Der eigentliche Basisleistungsvertrag wird dem Produzenten der Basisleistung weitergeleitet.

Produzenten ohne eigene Datenhaltung speichern ihre Basisleistung ohnehin in einer separaten Datenbank. Diese Basisleistungsvertragsdaten werden im Vertrag abgelegt. Informationen über Preisgestaltung, Instruktionen und auch Zins erscheinen nicht im Vertrag. Die Speicherung und Abfrage erfolgt direkt über die entsprechende Softwareprogramm-Komponente. Ein Auszug der wichtigsten Vertrag-Daten wird in ein Vertrag-Verzeichnis repliziert, das als Nachschlageverzeichnis zur Verfügung steht.

In der Softwareprogramm-Komponente Vertrag werden alle Kunden-/Partner-relevanten Kunden-Verträge geführt und verwaltet. Die Softwareprogramm-Komponente Vertrag stellt Dienste zur Bewirtschaftung der Vertragsdaten zur Verfügung. Im Verhältnis zu dritten Softwareprogramm-Komponenten werden die vertragsspezifischen Funktionalitäten/Services stets durch eine Softwareprogramm-Komponente Vertragsmanager und nie direkt aufgerufen. Eine Voraussetzung für die Eröffnung eines Vertrages ist das Vorhandensein eines Partners bzw. einer entsprechenden Geschäftsbeziehung. Jeder Vertrag muss demzufolge einer Geschäftsbeziehung oder einem Partner unmittelbar zugeordnet werden können. Die Bewirtschaftung der Verträge erfolgt stets durch die Softwareprogramm-Komponente Vertragsmanager. Die Basis für die Eröffnung eines Vertrages bildet die Produktvorlage. In der Produktvorlage werden alle nötigen Informationen, wie Wertebereiche, Defaults, Muss- und Kannfelder für den Abschluss eines Vertrages vorgegeben. Die aufgrund der Vorgaben in der Produktvorlage definierten individuellen Ausprägung eines verkauften Produktes werden im Vertrag abgebildet. Der Vertrag basiert folglich in Struktur und Inhalt auf der Produktvorlage, d.h. jeder Vertrag referenziert sich auf eine entsprechende Produktvorlage.

Der Vertragskopf wird aus der Produktvorlage abgeleitet und bildet die Klammer für die zum Vertrag gehörenden Basisleistungsverträge. Im Vertragskopf werden unterschiedliche Schlüssel (Produktvorlage-ID und Vertragskopf-ID) gehalten. Zusätzlich werden noch weitere Informationen wie beispielsweise Lebenszyklus-Infomationen (Status, Eröffnungsdatum, etc.) im Vertragskopf gehalten.

Der Basisleistungsvertrag basiert auf den in einer Produktvorlage definierten Basisleistungen. Abgeleitet von den unterschiedlichen Basisleistungstypen bzw. Basisleistungs-Produzenten unterscheiden sich auch die Basisleistungs-Verträge bezüglich dem Umfang der im Vertrag gehaltenen Informationen.

Basisleistungsproduzenten mit eigener Datenhaltung halten zur Abwicklung ihrer Geschäfte eine eigene physische Daten-Repräsentation (also Tabellen/Datenmodell) ihrer Basisleistungen. In diesem Fall werden auch die Vertrags-Daten des Basisleistungsvertrages in vollem Umfang in der Datenhaltung der Basisleistungsproduzenten gehalten.

Bei einem Vertragsschluss wird der vollständige Basisleistungsvertrag über eine Schnittstelle dem entsprechenden Basisleistungs-Produzenten übermittelt, welcher die Daten entsprechend in seinem Datenbank-Komponenten ablegt.

Im Vertrag selbst werden nur Referenzen (Schlüssel) gehalten, die auf den entsprechenden Basisleistungs-Produzenten respektive Halter des Basisleistungs-Vertrages zeigen.

Bei Basisleistungs-Produzenten mit separater Datenhaltung handelt es sich um Softwareprogramm-Komponenten, die keine eigene physische Repräsentation ihrer Basisleistung halten, sondern diese vollständig im Produkt speichern. Bei einem Vertragsschluss wird der vollständige Basisleistungs-Vertrag im Vertrag abgelegt; je nach Herkunft der Basisleistung kann es sich auch nur um eine teilweise Abbildung des Basisleistungs-Vertrages handeln.

Bei 'Referenzen' handelt es sich zum Beispiel um Preise, Instruktionen und Zinsen. Diese werden im Vertrag nicht abgelegt, auch nicht als Referenz (Schlüssel). Die zu einem Vertrag gehörenden Preise, Instruktionen, Zinsen müssen über eine entsprechende Abfrage bei der datenhaltenden Softwareprogramm-Komponente ermittelt werden.

Die Erfindung betrifft ferner ein Computerprogrammprodukt, welches dazu ausgelegt ist, die Realisierung eines in den vorhergehenden Ansprüchen definierten Systems zu bewirken, wenn es von einem Computer oder einem Computer-Netzwerk abgearbeitet wird. Das Computerprogrammprodukt kann beispielsweise auf einem computerlesbaren magnetischen oder optischen Informationsträger (etwa einer CD-ROM) gespeichert sein.

### Kurzbeschreibung der Zeichnungen

Nachfolgend wird die Erfindung anhand der beigefügten Zeichnungen näher erläutert.

Fig. 1 veranschaulicht schematisch ein Computersystem und die in dem Computersystem vorhandenen Computerprogrammkomponenten sowie deren Interaktion.

Fig. 2 veranschaulicht schematisch den Zusammenhang Basisleistung, Produktvorlage und Vertrag.

Fig. 3 veranschaulicht schematisch die Abarbeitung von Regeln durch die Softwareprogramm-Komponente Vertragsmanager.

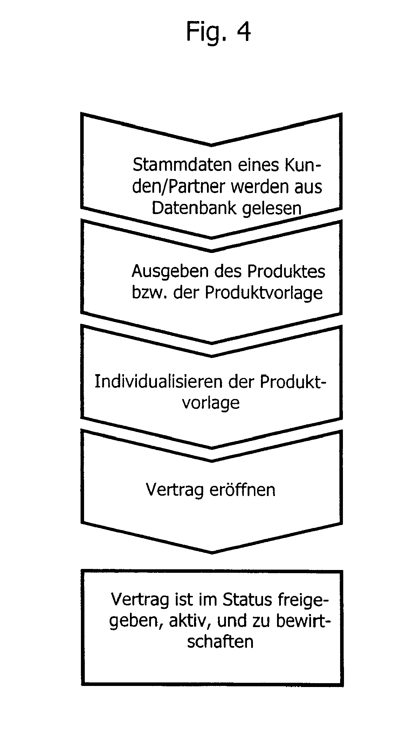

Fig. 4 veranschaulicht schematisch, wie aus einer Produktvorlage ein Vertrag erstellt wird.

Fig. 5 veranschaulicht schematisch den Aufbau von Regeln und deren Zusammenspiel mit den Basisleistungen und den Produktvorlagen.

Fig. 6 veranschaulicht schematisch den Aufruf von Regeln durch die Softwareprogramm-Komponente Vertragsmanager.

### Detaillierte Beschreibung von Ausführungsbeispielen

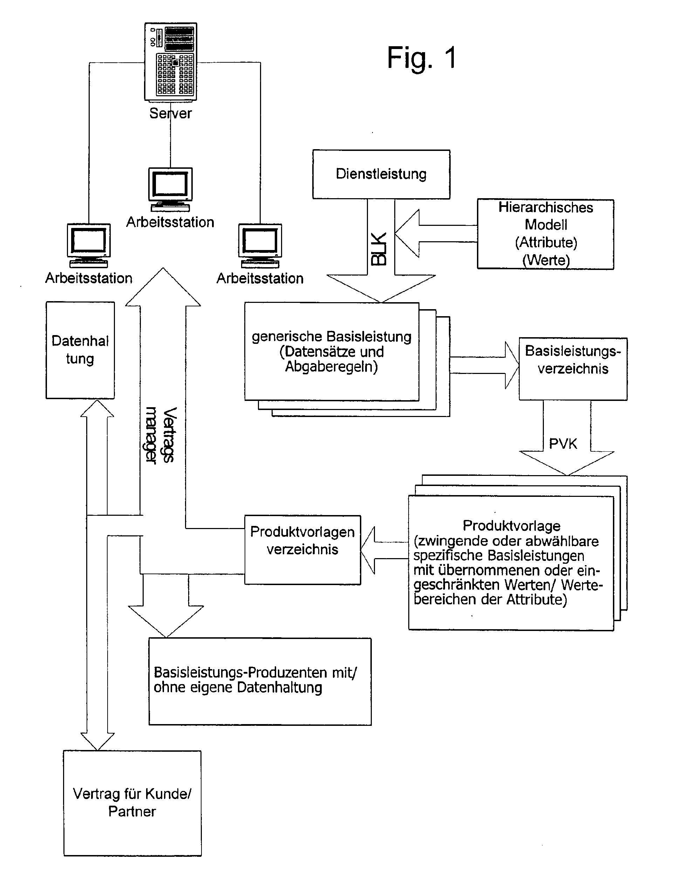

In Fig. 1 ist ein computer-implementiertes System zur Erzeugung, Bearbeitung und Verwaltung von strukturierten Datensätzen veranschaulicht. Dieses System hat einen oder mehrere Server, zur Daten- und/oder Programmhaltung, sowie eine Vielzahl von Arbeitsstationen. Die mit dem Server zum Daten-/Programmaustausch verbunden sind. In diesem System ist eine Computersoftwareprogramm-Komponente Basisleistungskonfigurator BLK vorgesehen ist. Der Basisleistungskonfigurator BLK dient dazu, eine generische Basisleistung zu definieren. Eine generische Basisleistung bildet wenigstens eine erbrachte oder zu erbringende Leistung nach Maßgabe eines ggf. hierarchisch organisierten Modells ab. Dazu wird mittels beschreibender Attribute und zugehörigen, für die Verarbeitung der Basisleistung notwendigen Werten oder Wertebereichen die generische Basisleistung strukturiert und auf einen oder mehrere Datensätze abgebildet, denen jeweils wenigstens eine Abgaberegel zugeordnet ist. Die Datensätze definieren zusammen mit den jeweiligen zugeordneten Abgaberegeln jeweils generische Basisleistung.

Weiterhin ist ein Basisleistungsverzeichnis BL-DICT vorgesehen, in dem die die generischen Basisleistungen definierenden Datensätze zusammen mit ihren zugeordneten Abgaberegeln in strukturierter Weise für einen Zugriff einer Computersoftwareprogramm-Komponente Produktvorlagenkonfigurator als Datenbasis abgelegt sind.

Der Produktvorlagenkonfigurator PVK ist dazu vorgesehen, aus der Datenbasis in dem Basisleistungsverzeichnis eine oder mehrere Basisleistungen zu kombinieren und in eine Produktvorlage POT zu überführen, indem die generischen Basisleistungen durch Übernehmen oder Einschränken der Werte und/oder Wertebereiche für die Attribute zu spezifischen Basisleistungen für die jeweilige Produktvorlage mutiert werden. Dazu umfasst eine Produktvorlage POT eine oder mehrere zwingend zu einem Produkt gehörende Basisleistungen. Außerdem kann sie eine oder mehrere ausdrücklich zu einem Produkt dazu- oder abzuwählende Basisleistungen umfassen.

Die Produktvorlagen sind in einem Produktvorlagenverzeichnis abgelegt. Darin ist die vollständige Struktur der Produktvorlagen in strukturierter Weise für einen Zugriff einer Computersoftwareprogramm-Komponente Vertragsmanager und zur Darstellung auf einer graphischen oder alphanumerischen Benutzeroberfläche GUI abgelegt sind.

Um aus dem Produktvorlagenverzeichnis in dem die Strukturen der Produktvorlagen abgelegt sind, eine Produktvorlage zur Individualisierung aufzurufen und spezifisch zu ergänzen, ist mittels des Vertragsmanagers entweder wenigstens ein vorgesetzter Wert zu übernehmen ist oder ein Wert innerhalb eines zugelassenen Bereiches auszuwählen. Mit anderen Worten wird der zugelassene Bereich (weiter) eingeschränkt. Damit wird ein einen Vertrag wiedergebendes individualisiertes Vertragsdokument erzeugt und das Anlegen dieses Vertrages in einer Datenbank und dessen technische Abwicklung angestoßen.

Der Vertrag umfasst dabei einen Vertragskopf und wenigstens eine Basisleistung, die aus der Produktvorlage abgeleitet sind. Dabei wird aus jeder in den Vertrag aufgenommenen Basisleistung ein Basisleistungsvertrag abgeleitet, von dem einem jeweiligen Basisleistungs-Produzenten vorbestimmte Basisleistungsvertragsdaten übermittelt werden. Bei Produzenten mit eigener Datenhaltung werden im Vertrag die Basisleistungsvertragsdaten als Schlüssel geführt und bei Produzenten ohne eigene Datenhaltung werden diese Basisleistungsvertragsdaten im Vertrag abgelegt. Die Softwareprogramm-Komponente Vertragsmanager stellt Funktionalitäten zur Bewirtschaftung der Vertragsdaten zur Verfügung und führt und verwaltet alle Kunden-/Partner-relevanten Kunden-Verträge.

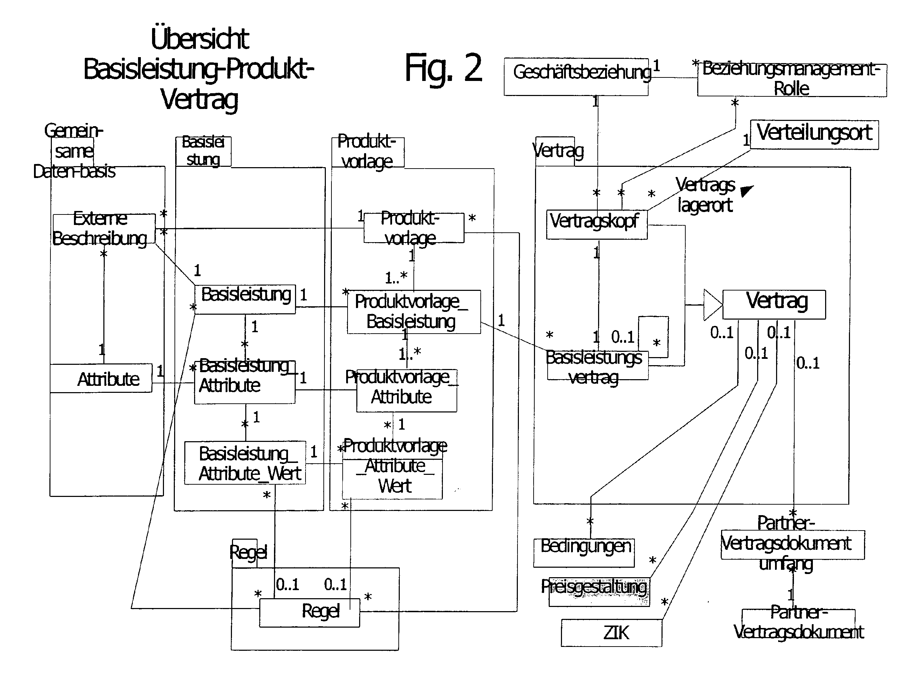

Fig. 2 veranschaulicht diese Zusammenhänge und Beziehungen zwischen Basisleistung(en), Regeln, Produktvorlage(n) und Vertrag noch in weiteren Details.

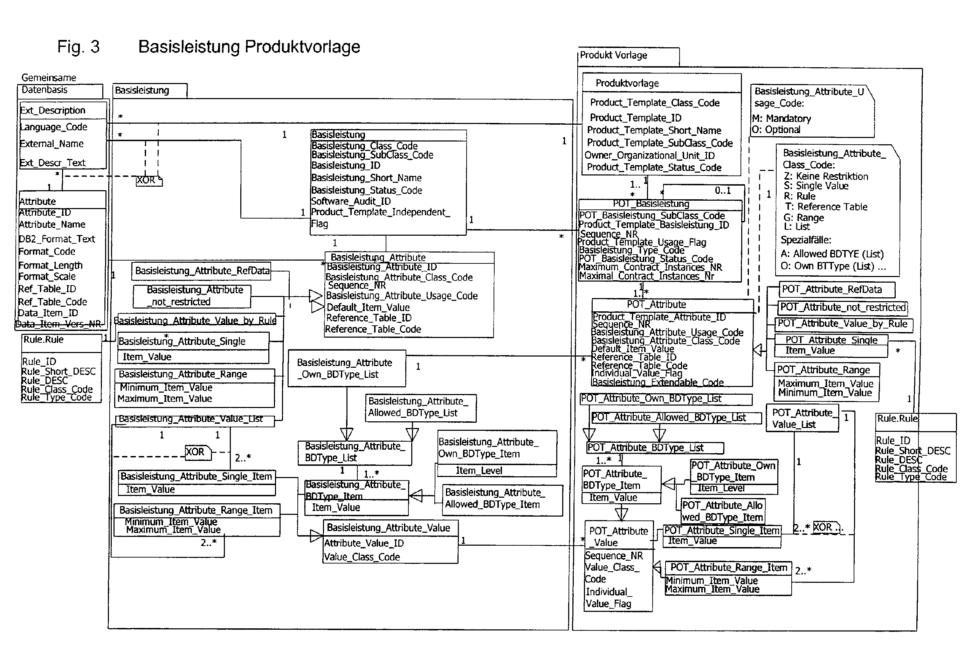

Eine erfindungsgemäße Datenstruktur einer Basisleistung kann folgenden Aufbau haben(siehe Fig. 3):

| Class: | |
|---|---|
| Attribute | |
| Attribut_Directory | Verzeichnis sämtlicher Attribute, mit welchen Basisleistungen und/oder Regeln definiert werden können. |
| | |

| Attribut: | |
|---|---|
| DB2_Format_Text | Physisches DB2-Format des Attributes |
| Attribute_ID | StandardIdentifier eines Attributes, welches in einer Basisleistung, Regel o.ä. verwendet wird |
| Attribute_Name | Name des Attributes, welches in einer Basisleistung, einer Regel oder dergl. verwendet wird. |
| Physical_Format_Text | Physisches DB2-Fomat, z.B. SMALINT, CHAR(16) |
| Format_Code | Format des definierten Attributes. |
| | Code-Verzeichnis |
| | C Code |
| | D Date |
| | I Identifier |
| | N Number |
| | Q Quantity |
| | T Text |
| Format_Length | Gesamtlänge des Feldes (inkl. Kommastellen) für die Verwendung in einer Basisleistung, Regel o.ä. |
| Format_Scale | Dezimalstellen bei Datentyp Decimal (sonst Zero) bei einem für die Verwendung in einer Basisleis- tung, Regel o.ä. |
| Reference_Table_ID | Id der Referenztabelle. Darf nur gefüllt sein, wenn es sich um ein Attribut mit FORMAT_CODE = "C" (Code) handelt z.B. |
| | - CNTRY |
| | - R10000 |
| Reference_Table_Code | Code-Nummer der Code-Tabelle (z.B. Code-Nummer innerhalt Ref_Tabelle R10001) Ist nur gefüllt, wenn im Feld REFEREN- CE_TABLE_ID der Wert "R10000' gefüllt ist. |
| Data_Item_ID | Fremdschlüssel zum DataItem-Katalog |
| Data_Item_Version_NR | Version des Referenzierten DataItems aus dem DataItem-Katalog Basisleistung |
| | |

| Class: | |
|---|---|
| Basisleistung | |
| | Für die Definition von Produkten verfügbare Basisleistungen |
| | |

| Attribut: | |
|---|---|
| Basisleistung_ID | Technische STID einer Basisleistung |
| Basisleistung_Short_Name | Kurzname der Basisleistung, nach welcher auch gesucht werden kann Der Kurzname ist ein eindeu- tiger, alternativer Suchschlüssel |
| Basisleistung_Status_Code | Status der Basisleistung; Für die Bildung von Produkten dürfen nur Basisleistungen mit Status = 2 (Productive) verwendet werden. |
| | Code-Verzeichnis |
| | 1 Entwicklung |
| | 2 Produktion |
| | 3 Außer Dienst gestellt |
| Software_Audit_ID | Ist die ID der physischen Instanz der Software Sub-Komponente. (s. I-SAC) Lieferant der Basisleistung aus anderen Softwareprogrammkom- ponenten. Beispiel:" HQE: Card Lifecycle Data |
| | |
| Product_emplate_Independent_Flag | Kennzeichnung, ob die Basisleisung als unabhängige Basisleistung verwendet werden kann |
| | 0 = Nein (nur als zugeordnete oder Service-Basisleistung verwendbar) |
| | 1 = ja (auch als unabhängige Service-Basisleistung möglich) |
| Basisleistung_Class_Code | Definiert, ob eine Basisleistung dem Vertragskopf oder dem Basisleistungs-Vertrag angehängt wird |
| | Code-Verzeichnis |
| | BL Basisleistung |
| | CH Vertragskopf |
| | |

| Class: | |
|---|---|
| Basisleistungs_Attribute | In einer Basisleistung verwendetes Attribut |

| Child_Class: | |
|---|---|
| Basisieistung_Attribute_not_restricted | |
| Basisleistung_Attribute_Range | |
| Basisleistung_Attribute_Single | |
| Basis!eistung_Attribute_Wert_By_Reget | |
| Basisleistung_Attribute_Wert_List | |
| | |

| Attribut: | |
|---|---|
| Basisleistung_Attribute_ID | Standard Identifier eines Attributes, welches in einer Basisleistung verwendet wird |
| Sequence_NR | Laufnummer des Attributs in einer Basisleistung |
| Basisleistung_Attribute_Class_Code | Definiert die Einschränkung des Wertebereiches eines Attributes in einer Basisleistung Beispiel: |
| | L: Gültig sind nur Werte aus der Attribut-Liste |
| | G: Gültig sind Werte innerhalb eines Ranges |
| | R: Die Gültigen Werte werden durch eine Regel definiert |
| | Code-Verzeichnis |
| | F fixiert |
| | N nicht eingeschränkt |
| | R eingeschränkt |
| Basisleistung_Attribute_Usage_Code | Festlegung, ob das Attribut in einer Produktvorlage optional oder zwingend ist. |
| | Coex ist ein Sonderfall von zwingend |
| | Code-Verzeichnis |
| | C COEX |
| | M Zwingend |
| | O Optional |
| Default_Item_Wert | Default_Wert eines in einer Basisleistung, Regel o.ä. verwendeten Attributes |
| Reference_Table_ID | Id der Referenztabelle. Darf nur gefüllt sein, wenn es sich um ein Attribut mit FORMAT_CODE = "C" (Code) handelt z.B. |
| | - CNTRY |
| | - R10000 |
| Reference_Table_Code | Code-Nummer der Code-Tabelle (z.B. Code-Nummer innerhalb Ref_Tabelle; Ist nur gefüllt, wenn im Feld REFERENCE_TABLE_ID der Wert "R10000' gefüllt ist. |
| | |

| Class: | |
|---|---|
| Basisleistung_Attribute_not_restricted | In einer Basisleistung verwendetes Attribut, dessen gültigen Werte nicht eingeschränkt sind, d.h. sämtliche Werte gem. Klasse "Attribute" sind zulässig. |
| | Entspricht Attribute_Class_Code = "Z" |
| Parent_Class: Basisleistung_Attribute | |
| Attribut: | |
| Basisleistung_Attribute_not_restricted: | |
| Basisleistung_Attribute_Wert_List | In einer Basisleistung verwendetes Attribut, dessen gültige Werte individuell durch eine Liste von Werte und/oder Bereichen festgelegt werden. |
| | Entspricht Attribute_Class_Code = "L" |
| | |

| Class: | |
|---|---|
| Basisleistung_Atrribute_Value | |
| Parent_Class: | |
| Basisleistung_Attribute | |
| | |
| BL_Attribute_Value | Gültiger Einzel-Wert oder Wertebereich eines in einer Produktvorlage verwendeten Attributes |
| | |

| Class | |
|---|---|
| Child_Class: | |
| Basisleistung_Attribute_Range_Item | |
| Basisleistung_Attribute_Single_Item | |
| Value_Class_Code Attribut | Definiert der Typ eines konkreten Wertes innerhalb einer Wert-Liste |
| | |
| Attribute_Wert_ID Attribut DataStandard | Eindeutige Identifikation eines Attribut-Wertes oder eines Wertebereiches für die Verwendung in einer Basisleistung, Regel o.ä. |
| Basisleistung_Attribute_Single_Item | Gültiger Einzel-Wert eines in einer Basisleistung verwendeten Attributes Class |
| | |

| Parent_Class: | |
|---|---|
| Basisteistung_Attribute_Wert Attribut: | |
| Item_Wert | Gültiger Einzelwert |
| Basisleistung_Attribute_Wert_By_Regel | In einer Basisleistung verwendetes Attribut, dessen Wert durch eine Regel fest definiert ist. Entspricht |
| | Attribute_Wert_Class_Code = "R" |

| Class: | |
|---|---|
| Parent_Class: | |
| Basisleistung_Attribute FK_Regel_ID (Regel) Attribut: | |
| DataStandard: | Referenz (STID) einer Regel, welche kontextabhängig den Wert des Attributes ermittelt |
| | |

| Class: | |
|---|---|
| Basisleistung_Attribute_Wert_By_Regel | |
| Basisleistung_Attribute_Range | |
| BL_Attribute_Wert_Range | Gültiger Wertebereich eines in einer Basisleistung verwendeten Attributes Class |
| | |

| Parent_Class: | |
|---|---|
| Basisleistung_Attribute Attribut: | |
| Minimum_Item_Wert | Minimum Wert des Wertebereiches |
| Maximum_Item_Wert | Maximum Wert des Wertebereiches |
| Basisleistung_Attribute_Range_Item | Gültiger Wertebereich eines in einer Basisleistung verwendeten Attributes Class |
| | |

| Basisleistung_Attribute_Value Attribut: | |
|---|---|
| Minimum_Item_Value | Minimum Wert des Wertebereiches |
| Maximum_Item_Value | Maximum Wert des Wertebereiches |
| Basisleistung_Attribute_Single | In einer Basisleistung verwendetes Attribut, dessen Werte durch einen Wert (Wert) fest definiert ist. Entspricht Basisleistung_Attribute-Class-Code = "S" |
| | |

| Class: | |
|---|---|
| Parent_Class: | |
| Basisleistung_Attribute Attribut: | |
| Item_Value | Gültiger Einzelwert |
| Basisleistung_Attribute_Value | Gültiger Einzel-Wert oder Wertebereich eines in einer Produktvorlage verwendeten Attributes |
| | |

| Class: | |
|---|---|
| DataStandard: | |
| Attribut: | |
| Basisleistung_Attribute-Value | |
| | |

| Class: | |
|---|---|
| Rule Child_Class: | |
| | Dynamic_ Rule |
| | Static_ Rule |
| | |

| Attribut: | |
|---|---|
| Rule_ID | |
| Rule_Short_DESC | Kurzbezeichnung einer Regel |
| Rule_DESC | Ausführliche Beschreibung einer Regel |
| Rule_Class_Code | Definiert, ob es sich um eine dynamische oder statische Regel handelt |
| | Code-Verzeichnis |
| | D Dynamic |
| | S Static |
| Rule_Type_Code | Gibt an, um was für eine Art von Regel es sich handelt: Eligibility-Regel (Abgaberegel), Validierungs-Regel, oder Attribute-Regel (Gültige Werte, Default, etc.) |
| | Code-Verzeichnis |
| | A Attribute-Regel |
| | E Eligibility-Regel |
| | V Validation-Regel |
| | |

| Class: | |
|---|---|
| External_Description | Sprachabhänge Beschreibungen (Name, Definition) von Attributen, Basisleistungen, Produkten und Regeln |
| | |

| Attribut: | |
|---|---|
| Language_Code | Sprache (im ISO-Format) |
| | Code-Verzeichnis |
| | de deutsch |
| | en englisch |
| | es spanisch |
| | fr französisch |
| | it italienisch |
| | pt portugiesisch |
| External_Name | Externer Name eines Attributes in der angegebenen Sprache, einer Basisleistung, eines Produktes oder einer Regel, welcher z.B. für die Beschriftung der graphischen Benutzerschnittstellen (GUIs) verwendet wird. |
| External_Description_Text | Beschreibung eines Attributes in der angegebenen Sprache, einer Basisleistung, eines Produktes oder einer Regel. |

Ein Produkt wird aus einer oder mehreren Basisleistungen erstellt. Dazu enthält ein Basisleistungsverzeichnis (BL-DICT) Basisleistungen (BL) von Providern / Geschäftsbereichen mit den folgenden Zuständen:
- Basisleistung ist freigegeben und aktiv für Produktkonfiguration
- Basisleistung ist freigegeben und inaktiv für Produktkonfiguration
- Basisleistung ist nicht freigegeben und inaktiv für Produktkonfiguration (Es darf auch keine Verträge mehr geben)

Nachstehend werden die Schritte beschrieben, mit denen ein Produkt konfiguriert wird, indem eine Produktvorlage (POT) erstellt wird (oder eine bestehende Produktvorlage (POT) in der Art einer Schablone wieder verwendet wird):
- Produktvorlage definieren (Kurztext, Langtext, Identifier, Status, usw.)
- Eine oder mehrere Basisleistungen aus dem Basisleistungsverzeichnis (BL-DICT) importieren
- Basisleistung muss freigegeben und aktiv sein
   ■ Basisleistung wird als Produktvorlagen-Basisleistung instanziert
   ■ An der Produktvorlagen-Basisleistung (POT-BL) werden folgende Aktionen ausgeführt:
      - Ihr Status wird "in Bearbeitung" geändert
      - Für die Produktvorlagen-Basisleistung werden Regeln definiert.
      - Erlaubte Geschäftsfall-Typen festlegen (eine Basisleistung kann mehrere Geschäftsfälle haben (zum Beispiel Basisleistung Konto hat die Geschäftsfall-Typen Abschluss pro Monat, Zwischenabschluss oder Jahresabschluss)
      - Attributwertebereiche festlegen bzw. eingrenzen (innerhalb der erlaubten Werte der Basisleistung).
      - Defaultwerte der Attribute festlegen.

Beim Anlegen einer Produktvorlage aus einer oder mehreren Basisleistungen wird der Stand der eingeschlossenen Basisleistungen fixiert, der zum Zeitpunkt der Erstellung der Produktvorlage produktiv ist. Dies ist unabhängig davon, ob Anpassungen der Basisleistungen in der Produktvorlage vorgenommen werden oder nicht. Diese Referenzierung gilt bis zur nächsten expliziten Mutation der Produktvorlage. Dementsprechend gibt es keine "gleitenden" oder automatischen Aktualisierungen von Produktvorlagen.

Eine Prüf-Funktion ist vorgesehen, um bei Bedarf alle diejenigen Produktvorlagen zu erfassen, die Basisleistungen verwenden, welche nach der Erstellung bzw. der letzten Mutation der Produktvorlage mutiert wurden. Ausgehend hiervon ist zu überprüfen, ob die betroffene Produktvorlage weiterhin sinnvoll verwendet werden kann. Insbesondere die Individualisierungen von Basisleistungen in einer Produktvorlage und die Zuordnung von Regeln zu einem Produktvorlage sind zu überprüfen. Soll eine Produktvorlage auf den neuesten Stand der enthaltenen Basisleistungen gebracht werden, ist eine explizite Mutation auf den Kopfdaten der Produktvorlage erforderlich.

Dazu wird ein Eintrag zur bestehenden Produktvorlagen-ID mit dem aktuellen Zeitstempel vorgenommen.

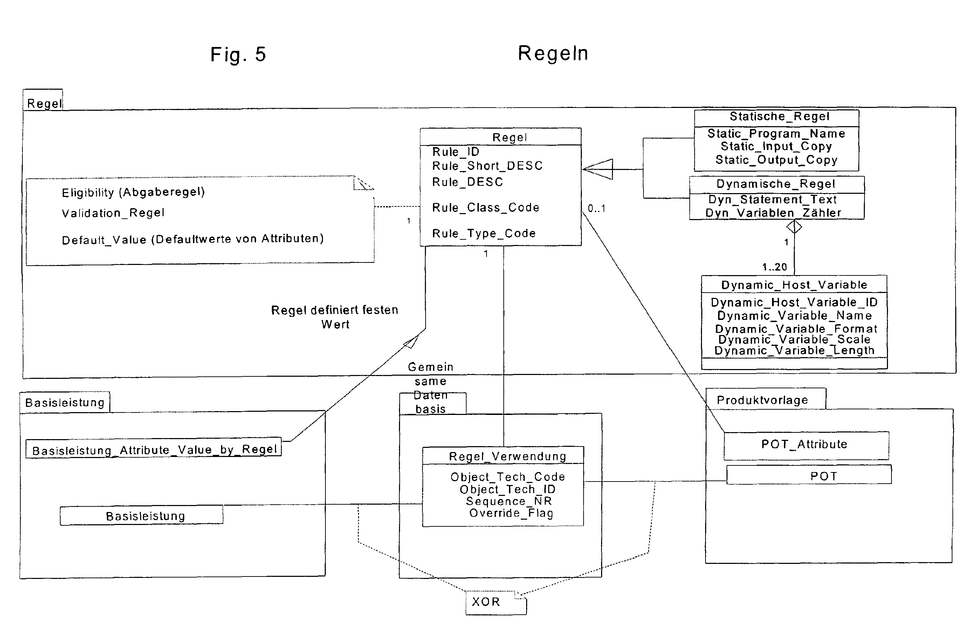

Aus einer Produktvorlage wird ein Vertrag erstellt, indem folgende Aktionen erfolgen (Siehe Fig. 5):
◆ Die Stammdaten eines Kunden/Partner werden aus der entsprechenden Datenbank gelesen.
   - Überprüfung auf für diesen Kunden/Partner passende oder erlaubte Produkte
   - Ausgeben der Produktliste aller passenden/erlaubten Produkte
◆ Die zugehörige Produktvorlage wird gelesen.
   - Eingabe: Produktvorlage_ID und Partner_ID
   - Überprüfung der Abgaberegeln
   - Ausgeben des Produktes bzw. der Produktvorlage auf der graphischen/alphanumerischen Benutzeroberfläche
◆ Individualisieren der Produktvorlage, indem
   - Attribute im Rahmen der möglichen Wertebereiche angepasst werden.
◆ Vertrag eröffnen, indem
   - Abgaberegeln überprüft werden
   - Der Geschäftsvorfall "Eröffnung Vertrag" wird in den Datenbanken der Bank angelegt.
   - Der Vertrag wird in die Softwareprogramm-Komponente "Vertrag" und in das Vertragsverzeichnis eingetragen.
   - Allfällige Instruktionen und Auslösungen werden angelegt.
   - Entsprechende Softwareprogramm-Komponenten werden nachgeführt.
   - Die Softwareprogramm-Komponenten "Preisgestaltung" und die Attributsableitung (bei Kontoprodukten) erhalten Nachrichten mit den teilweisen oder kompletten Daten des Vertrages.

Bei der Bildung eines Vertrages wird auf die Metadaten der Basisleistungen und Produktvorlagen zugegriffen. Aufgrund dieser Informationen ist bekannt, welche Softwareprogramm-Komponenten bzw. Geschäfts-Subsysteme/Lösungsbereiche im jeweiligen Vertrag beteiligt sein können bzw. müssen. Darüber hinaus ist bekannt, mittels welcher Attribute / Schnittstelle mit der korrespondierenden Komponente Daten ausgetauscht werden können.

Die Metadaten der Basisleistung, insbesondere der Basisleistung in einer Produktvorlage enthalten über die Strukturdaten hinaus auch zulässige Wertebereiche der Basisleistungs-Attribute. Diese Wertebereiche werden in der Regel von der entsprechenden Softwareprogramm-Komponente festgelegt und beschreiben die zulässigen Werte. Die Wertebereiche können bereits in der Basisleistungsdefinition durchaus komplex sein, z.B. sind Kombinationen aus Listen von Einzelwerten und Wertebereichen abbildbar. Dies gilt auch für Verweise auf andere Tabellen wie z.B. Referenzdaten. Aus Sicht eines einzelnen Attributs handelt es sich um statische Wertebereiche, die evtl. nicht ausreichend sein kann. Als Beispiel sei ein Wertebereich für ein Attribut genannt, der mittels einer datumsabhängigen Formel festgelegt ist. Für solche, sicherlich nicht allzu häufigen Fälle kann die Regelbasis als Lösung herangezogen werden, indem für das Attribut der Basisleistung als Wert der Schlüssel der Regel angegeben wird, welche die komplexe Validierung durchführt.

Auch aus Sicht einer Basisleistung kann eine Wertebereichsfestlegung pro Attribut nicht hinreichend sein. Eine attributsübergreifende Festlegung von Wertebereichen ist möglich.

Beispiel: Wenn Attribut A den Wert A1 annimmt, darf Attribut B nur noch die Werte B1, B2 und B3 annehmen; in allen anderen Fällen ist für das Attribut B der Wertebereich B10 bis B100 zulässig.

Ebenfalls aus Sicht einer Produktvorlage kann die attributspezifische Festlegung der Wertebereiche nicht ausreichend sein. Für die oben genannten Fälle, d.h. für dynamische Wertebereiche einzelner Attribute und für alle attributsübergreifenden Wertebereichsprüfungen werden entsprechende Regeln via Regelbasis zur Verfügung gestellt. Die darin enthaltenen Regeln sind auf Wiederverwendbarkeit hin formuliert, damit möglichst viele Prüfungen zu unterschiedlichen Attributen, Basisleistungen und Produktvorlagen mit möglichst wenigen Regeln durchgeführt werden können. Um diese Wiederverwendbarkeit zu ermöglichen, wird zwischen einer Regel und ihrem zugeordneten Objekt (Attribut, Basisleistung, Produktvorlage) explizit eine Beziehung hergestellt. Obwohl zwischen jedem Objekt und jeder Regel eine Beziehung hergestellt werden kann, gibt es folgende Vorgabe:

Für Regeln wird in der Regelbasis kein Lebenszyklus geführt. Hierbei werden Statische und Dynamische Regeln unterschieden. In der Regelbasis werden für statische Regeln nur die Informationen Programm-Name, Input-/Output-Copybookname gehalten. Inhaltliche Mutationen von Regeln werden somit nicht in der Regelbasis, sondern im referenzierten Programm vorgenommen. Dynamische Regeln sind funktional limitiert und nur für Prototyping-Zwecke vorgesehen. Die Beziehung zwischen Regel und Produktvorlage ist als Beziehungsentität im Modell vorgesehen. Hier ist es möglich, im Lebenszyklus einer Produktvorlage nachträglich Regeln hinzufügen bzw. zu entfernen, ohne dass die Produktvorlage selbst geändert werden müsste. Zur korrekten Abbildung einer Produktvorlage wird für diese Beziehung ein Lebenszyklus mitgeführt, so dass zu jedem Zeitpunkt bei der Kontraktierung die richtigen, das heißt die aktuell gültigen Regeln durchlaufen und abgearbeitet werden.

Dynamische Regeln bestehen meist aus einem SQL-Statement und werden von einem dafür zur Verfügung stehenden Treiberprogramm vorbereitet und ausgeführt. Die Konvention besteht darin, dass bei SQLCODE 0 (Zero) der Wert OK, bei SQLCODE 100 der Wert NOK und bei allen anderen SQLCODES der Wert DB-ERROR (dies ist ein Spezialfall für NOK) zurückgegeben wird. Die Regelbasis enthält neben dem SQL-Statementtext auch beschreibende Informationen zu den Variablen, die für die Ausführung der Regel versorgt sein müssen. In der Produktion werden wegen der höheren Stabilität und Geschwindigkeit nur statische Regeln ausgeführt. Da in der Regelbasis zu einer Regel der Programmname sowie die Ein- und Ausgabe-Copybooks gespeichert werden, kann auch für die Durchführung der statischen Regeln ein allgemeines Treiberprogramm zur Verfügung gestellt werden.

Bei Validierungs-Regeln soll der dynamische Wertebereich eines Attributs nicht attributsübergreifend gestaltet sein. Anstelle der statischen Werte zu einem Attribut wird der Schlüssel der Regel eingetragen. Dies bedeutet gleichzeitig, dass in diesem Fall dem Attribut exakt eine Regel zugeordnet wird. Bei einer attributsübergreifenden Wertebereichsprüfung von Attributen einer Basisleistung oder einer Basisleistung in einer Produktvorlage wird zwischen einer Basisleistung bzw. Basisleistung in einer Produktvorlage und einer Regel der Regelbasis eine explizite (n:m)-Beziehung hergestellt. Somit kann eine Basisleistung Beziehung zu mehreren Regeln haben wie auch eine Regel in mehreren Basisleistungen Verwendung finden kann.

Abgabe-Regeln können über mehrere Attribute einer Produktvorlage übergreifend eingesetzt werden, d.h. auch übergreifend über mehrere Basisleistungen dieser Produktvorlage. So können Regeln eine beträchtliche Komplexität annehmen.

Alle oben genannten Typen von Regeln sind "harte" Regeln, d.h. sie zeigen an, ob eine bestimmte Datenkombination zu einem Vertrag führen kann oder nicht.

Dabei empfiehlt es sich, Abgabe-Regeln nur auf der Ebene der Produktvorlagen zu implementieren. Die Definition von Abgabe-Regeln auf der Ebene der Basisleistung schränkt die Wiederverwendbarkeit der Basisleistung stark ein.

Eine Regel ist ein eigenständiges Objekt mit eigener Kennzeichnung (STID) und einem beschreibenden Text von 160 Bytes. Die Argumente einer Regel ist eine Liste von Parameterwerten. Die Rückgabewerte einer Regel sind meist OK bzw. NOK.

Bei den Verarbeitungsarten einer Regel wird zwischen statisch (dahinter verbirgt sich ein Programm mit fester Input- und Outputschnittstelle (Copy-Books)) und dynamisch (hinterlegter Statement-Text eines SQL Statements mit Parameter-Markern in der WHERE Condition Ergebnis sind SQLCODE 0 (=OK), SQLCODE 100 (=NOK), andere Codes (=Error)) unterschieden.

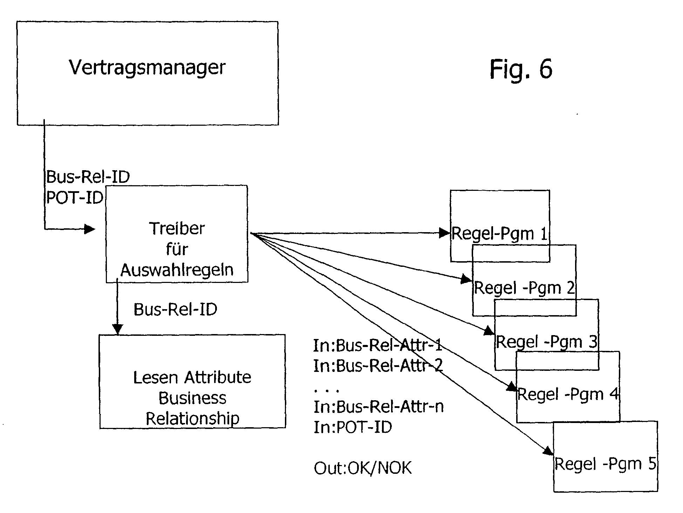

Wie in Fig. 6 veranschaulicht, erfolgt der Aufruf einer Regel so, dass die Softwareprogramm-Komponente Vertragsmanager die Regel-ID sowie die Eingabewerte für die Regel, z.B. aus der GUI erhält. Damit wird ein generischer Regeltreiber aufgerufen; dieser liest die Regeltabelle. Die Regel wird dann wird statisch oder dynamisch ausgeführt (statisch für den Produktionsbetrieb; dynamisch zum Prototyping in der Entwicklung). Die Informationen über Regeln in der Regeltabelle sind im statischen Fall der Programmname und die Eingabe-/Ausgabe-Schnittstelle (= Copybooks) und im dynamischen Fall ein SQL Statement-Text mit Parameter-Markern (Platzhalter für Variablen), mit etwa zum Beispiel 20 Variablen, Informationen zu Name, Format der Variablen.

Bei einer statischen Regel sind alle Copybooks aller statischen Regeln dem Regeltreiber bekannt. Die übergebenen Parameterwerte werden in die Felder des Copybook übertragen. Anschliessend erfolgt ein Aufruf der Art. "CALL programm USING copybook-in, copybook-out". Daraufhin erfolgt eine Rückgabe von OK bzw. NOK aus dem Regeltreiber.

Bei einer dynamischen Regel werden die Parameter-Marker im Statement-Text durch übergebene Werte ersetzt. Die Parameter-Formate sind aus der Regeltabelle bekannt (numeric, character, date-time, ..). Anschließend erfolgt eine Abarbeitung der Regel durch PREPARE und EXECUTE des Statement-Textes. SQLCODE 0 ergibt OK, SQLCODE 100 ergibt NOK, sonst DB-Fehler.

Der Aufruf von Abgaberegeln erfolgt zum Beispiel wenn ein Kunde/Partner eine bestimmte Leistung erhalten möchte. Aufgrund einer Suchfunktion verfügt die Programmkomponente Vertragsmanager über eine Liste von POT's, die die dafür relevanten Basisleistungen enthalten. Die Programmkomponente Vertragsmanager ruft für jedes dieser POT's einen Regeltreiber auf, der die Abgabefähigkeit des POT für den jeweiligen Kunden prüft. Dazu gibt der Regeltreiber die Geschäftsbeziehungs-ID und die POT_ID ein. Als Ausgabe des Regeltreibers kommt dann OK/NOK.

Der Regeltreiber führt folgende Aktivitäten aus: Lesen der Daten zur Geschäftsbeziehungs-ID und Lesen der Regelverwendung mit POT-ID. Anschließend wird jedes Regel-Programm wird mit folgender Schnittstelle aufgerufen: Attribute zur Geschäftsbeziehungs-ID, POT-ID und Rückgabe des Regel-Programms: OK/NOK.

Beim ersten NOK wird der Aufruf der Regel-Programme abgebrochen und dem Vertragsmanager wird NOK zurückgegeben.

Zur Sicherstellung eines statischen Wertebereichs (inkl. Referenztabellen) werden keine Regeln in der Regelbasis benötigt, da dies bereits durch Tabellen für die Attributwerte bereitgestellt wird.

Die Daten von Basisleistungen (BL) und Produktvorlagen (POT) werden so bewirtschaftet, dass jede Mutation dieser Objekte zu jedem Zeitpunkt nachvollziehbar und rekonstruierbar ist. Mutationen können im Onlinebetrieb ad hoc Gültigkeit erlangen. Auch Mutationen in die Zukunft sind zulässig. Aus Stabilitäts- und Handhabungsüberlegungen wird als aktuell gültiger Stand einer Basisleistung bzw. Produktvorlage via Konvention (Empfehlung) der Stand definiert, der zum aktuellen Datum per 0 Uhr gültig ist.

Neben diesem Grundsatz gibt es folgende Konventionen und applikatorische Verfahren, die für die Bewirtschaftung von Basisleistungen und Produktvorlagen vorgesehen sind:
Eine Basisleistung kann auf folgende Art und Weise mutiert werden:
   - Hinzufügen/Entfernen von Attributen
   - Änderung der zulässigen Wertebereiche von Attributen
Diese Mutationen werden von der prozessierenden Softwareprogramm-Komponente (Basisleistungs-Produzent) veranlasst. Das Hinzufügen bzw. Entfernen von Attributen ist ein relativ selten vorkommender, massiver Eingriff. Analog zu der Änderung der Basisleistung muss auch die Schnittstelle angepasst werden.

## Patentansprüche

1. Computer-implementiertes System zur Erzeugung, Bearbeitung und Verwaltung von strukturierten Datensätzen, wobei in diesem System
- eine Computersoftwareprogramm-Komponente Vertragsmanager vorgesehen ist, um aus einem Produktvorlagenverzeichnis, in dem die Strukturen der Produktvorlagen in strukturierter Weise abgelegt sind, eine Produktvorlage zur Individualisierung aufzurufen und spezifisch zu ergänzen, indem entweder wenigstens ein vorgesetzter Wert zu übernehmen ist oder ein Wert innerhalb eines zugelassenen Bereiches auszuwählen ist, um
- ein einen Vertrag wiedergebendes individualisiertes Vertragsdokument zu erzeugen und das Anlegen dieses Vertrages in einer Datenbank und dessen technische Abwicklung anzustoßen, wobei
-- der Vertrag einen Vertragskopf und wenigstens eine Basisleistung aufweist, die aus der Produktvorlage abgeleitet sind, wobei
aus jeder in den Vertrag aufgenommenen Basisleistung ein Basisleistungsvertrag abgeleitet wird, von dem einem jeweiligen Basisleistungs-Produzenten vorbestimmte Basisleistungsvertragsdaten übermittelt werden, und bei Produzenten mit eigener Datenhaltung im Vertrag die Basisleistungsvertragsdaten als Schlüssel geführt werden und bei Produzenten ohne eigene Datenhaltung diese Basisleistungsvertragsdaten im Vertrag abgelegt werden, und wobei
- die Softwareprogramm-Komponente Vertragsmanager Funktionalitäten zur Bewirtschaftung der Vertragsdaten zur Verfügung stellt und alle Kunden-/Partner-relevanten Kunden-Verträge führt und verwaltet.

2. Das computer-implementierte System zur Erzeugung, Bearbeitung und Verwaltung von strukturierten Datensätzen nach Anspruch 20, bei dem eine Produktvorlage eine oder mehrere zwingend zu einem Produkt gehörende Basisleistungen umfasst, und eine oder mehrere ausdrücklich zu einem Produkt dazu- oder abzuwählende Basisleistungen umfassen kann.

3. Das computer-implementierte System zur Erzeugung, Bearbeitung und Verwaltung von strukturierten Datensätzen nach einem der vorhergehenden Ansprüche, bei dem ein Auszug vorbestimmter Vertrags-Daten in ein Vertrags-Verzeichnis zu replizieren ist.

4. Das computer-implementierte System zur Erzeugung, Bearbeitung und Verwaltung von strukturierten Datensätzen nach einem der vorhergehenden Ansprüche, bei dem der aus der Produktvorlage abgeleitete Vertragskopf eine Klammer für die zum Vertrag gehörenden Basisleistungsverträge bildet, und in dem Vertragskopf unterschiedliche Schlüssel gehalten werden.

5. Das computer-implementierte System zur Erzeugung, Bearbeitung und Verwaltung von strukturierten Datensätzen nach einem der vorhergehenden Ansprüche, bei dem jeder Basisleistungsvertrag auf den in einer Produktvorlage definierten Basisleistungen basiert.

6. Das computer-implementierte System zur Erzeugung, Bearbeitung und Verwaltung von strukturierten Datensätzen nach einem der vorhergehenden Ansprüche, bei dem jeder Basisleistung jeweils wenigstens eine Abgaberegel zugeordnet ist.

7. Das computer-implementierte System zur Erzeugung, Bearbeitung und Verwaltung von strukturierten Datensätzen nach einem der vorhergehenden Ansprüche, bei dem in dem Vertrag durch Abgaberegeln bestimmt wird, welche Bedingungen zu erfüllen sind, damit einem Kunden/Partner ein Produkt mit der jeweiligen Basisleistung zugänglich gemacht wird.

8. Das computer-implementierte System zur Erzeugung, Bearbeitung und Verwaltung von strukturierten Datensätzen nach einem der vorhergehenden Ansprüche, bei dem die Abgaberegeln Alters-, Domizil-, Kundensegment-, und/oder rechtliche Einschränkungen umfassen.

9. Das computer-implementierte System zur Erzeugung, Bearbeitung und Verwaltung von strukturierten Datensätzen nach einem der vorhergehenden Ansprüche, bei dem die Abgaberegeln in dem Vertrag nicht zu übersteuern sind.

10. Das computer-implementierte System zur Erzeugung, Bearbeitung und Verwaltung von strukturierten Datensätzen nach einem der vorhergehenden Ansprüche, bei dem die Abgaberegeln mit rechtlichen Einschränkungen zwingend bei der Produktkonfiguration in den Vertrag zu übernehmen sind.

11. Das computer-implementierte System zur Erzeugung, Bearbeitung und Verwaltung von strukturierten Datensätzen nach einem der vorhergehenden Ansprüche, bei dem Validierungsregeln vorgesehen sind, um zu prüfen, ob in dem Vertrag Werte oder -Bereiche von Attributen eingehalten werden, oder ob Eingaben in Feldern im Verhältnis zu den jeweiligen Feldformaten korrekt sind.

12. Das computer-implementierte System zur Erzeugung, Bearbeitung und Verwaltung von strukturierten Datensätzen nach einem der vorhergehenden Ansprüche, bei dem die Validierungsregeln bei ihrer Prüfung, ob in dem Vertrag Werte oder -Bereiche von Attributen eingehalten werden, oder ob Eingaben in Feldern im Verhältnis zu den jeweiligen Feldformaten korrekt sind, als Ergebnis "OK/NOK" zurückgeben.

13. Das computer-implementierte System zur Erzeugung, Bearbeitung und Verwaltung von strukturierten Datensätzen nach einem der vorhergehenden Ansprüche, bei dem eine oder mehrere Validierungsregeln vorgesehen sind, die zur Individualisierung eines Vertrages eine Vorauswahl und Prüfung von Produktvorlagen vornehmen, für die für einen Kunden/Partner eine Vertragsbeziehung zu eröffnen / zu modifizieren ist, und die bei ihrer Prüfung einen Ergebnissatz zurückgeben.

14. Das computer-implementierte System zur Erzeugung, Bearbeitung und Verwaltung von strukturierten Datensätzen nach einem der vorhergehenden Ansprüche, bei dem zur Individualisierung eines Vertrages eine oder mehrere Validierungsregeln zur Ermittlung einer kunden-/partnerspezifischen Voreinstellung (Default) vor oder in der Darstellung auf einer graphischen oder alphanumerischen Benutzeroberfläche vorgesehen sind.

15. Das computer-implementierte System zur Erzeugung, Bearbeitung und Verwaltung von strukturierten Datensätzen nach einem der vorhergehenden Ansprüche, bei dem eine oder mehrere Validierungsregeln zur Prüfung der Einhaltung eines Wertes oder Wertebereichs oder eines Datensatzes zur Sicherstellung der Verarbeitbarkeit einer Basisleistung, wobei die zu prüfenden Werte/ Wertebereiche/Datensätze sind in der jeweiligen Produktvorlage vorgegeben sind.

16. Das computer-implementierte System zur Erzeugung, Bearbeitung und Verwaltung von strukturierten Datensätzen nach einem der vorhergehenden Ansprüche, bei dem die zu einem Vertrag gehörenden Daten so bewirtschaftet werden, dass jede Mutation der Daten zu jedem Zeitpunkt nachvollziehbar und rekonstruierbar ist, und bei dem die Speicherungsdauer von nicht mehr gültigen Daten des Vertrages als Attribut festgelegt ist.

17. Das computer-implementierte System zur Erzeugung, Bearbeitung und Verwaltung von strukturierten Datensätzen nach einem der vorhergehenden Ansprüche, bei dem eine Änderung eines Attributes des Vertragskopfes ein Erzeugen eines neuen Eintrages in dem Vertragskopf auslöst.

18. Das computer-implementierte System zur Erzeugung, Bearbeitung und Verwaltung von strukturierten Datensätzen nach einem der vorhergehenden Ansprüche, bei dem wenigstens ein abgeleitetes Attribut im Vertragskopf gespeichert ist, wobei eine Änderungen eines abgeleiteten Attributes kein Erzeugen eines neuen Eintrages in dem Vertragskopf auslöst, sondern eine Aktualisierung dieses Attributs erfolgt.

19. Das computer-implementierte System zur Erzeugung, Bearbeitung und Verwaltung von strukturierten Datensätzen nach einem der vorhergehenden Ansprüche, bei dem eine Änderung eines Attributes eines Basisleistungsvertrages ein Erzeugen eines neuen Eintrages in dem Basisleistungsvertrag auslöst und/oder eine Aktualisierung dieses Attributs im Vertragskopf erfolgt.

20. Das computer-implementierte System zur Erzeugung, Bearbeitung und Verwaltung von strukturierten Datensätzen nach einem der vorhergehenden Ansprüche, bei dem beim Erzeugen eines individualisierten Vertragskopfes und/oder eines Basisleistungsvertrages eine Referenz auf eine Produktvorlage oder eine spezifische Basisleistungen für die jeweilige Produktvorlage erzeugt wird.

21. Computer-implementiertes Verfahren zur Erzeugung, Bearbeitung und Verwaltung von strukturierten Datensätzen, wobei
- eine Computersoftwareprogramm-Komponente Vertragsmanager aus einem Produktvorlagenverzeichnis, in dem die Strukturen der Produktvorlagen in strukturierter Weise abgelegt sind, eine Produktvorlage zur Individualisierung aufruft und spezifisch ergänzt, indem entweder wenigstens ein vorgesetzter Wert zu übernehmen ist oder ein Wert innerhalb eines zugelassenen Bereiches auszuwählen ist, um
- ein einen Vertrag wiedergebendes individualisiertes Vertragsdokument zu erzeugen und das Anlegen dieses Vertrages in einer Datenbank und dessen technische Abwicklung anzustoßen, wobei
-- der Vertrag einen Vertragskopf und wenigstens eine Basisleistung aufweist, die aus der Produktvorlage abgeleitet sind, wobei
aus jeder in den Vertrag aufgenommenen Basisleistung ein Basisleistungsvertrag abgeleitet wird, von dem einem jeweiligen Basisleistungs-Produzenten vorbestimmte Basisleistungsvertragsdaten übermittelt werden, und bei Produzenten mit eigener Datenhaltung im Vertrag die Basisleistungsvertragsdaten als Schlüssel geführt werden und bei Produzenten ohne eigene Datenhaltung diese Basisleistungsvertragsdaten im Vertrag abgelegt werden, und wobei
- die Softwareprogramm-Komponente Vertragsmanager Funktionalitäten zur Bewirtschaftung der Vertragsdaten zur Verfügung stellt und alle Kunden-/Partner-relevanten Kunden-Verträge führt und verwaltet.

22. Das computer-implementierte Verfahren zur Erzeugung, Bearbeitung und Verwaltung von strukturierten Datensätzen nach Anspruch 20, bei dem eine Produktvorlage eine oder mehrere zwingend zu einem Produkt gehörende Basisleistungen umfasst, und eine oder mehrere ausdrücklich zu einem Produkt dazu- oder abzuwählende Basisleistungen umfassen kann.

23. Das computer-implementierte Verfahren zur Erzeugung, Bearbeitung und Verwaltung von strukturierten Datensätzen nach einem der vorhergehenden Ansprüche, bei dem ein Auszug vorbestimmter Vertrags-Daten in ein Vertrags-Verzeichnis zu replizieren ist, bei dem der aus der Produktvorlage abgeleitete Vertragskopf eine Klammer für die zum Vertrag gehörenden Basisleistungsverträge bildet, und in dem Vertragskopf unterschiedliche Schlüssel gehalten werden.

24. Das computer-implementierte Verfahren zur Erzeugung, Bearbeitung und Verwaltung von strukturierten Datensätzen nach einem der vorhergehenden Ansprüche, bei dem jeder Basisleistungsvertrag auf den in einer Produktvorlage definierten Basisleistungen basiert.

25. Das computer-implementierte Verfahren zur Erzeugung, Bearbeitung und Verwaltung von strukturierten Datensätzen nach einem der vorhergehenden Ansprüche, bei dem jeder Basisleistung jeweils wenigstens eine Abgaberegel zugeordnet ist, wobei vorzugsweise in dem Vertrag durch Abgaberegeln bestimmt wird, welche Bedingungen zu erfüllen sind, damit einem Kunden/Partner ein Produkt mit der jeweiligen Basisleistung zugänglich gemacht wird, und/oder bei dem die Abgaberegeln Alters-, Domizil-, Kundensegment-, und/oder rechtliche Einschränkungen umfassen, und/oder bei dem die Abgaberegeln in dem Vertrag nicht zu übersteuern sind, und/oderbei dem die Abgaberegeln mit rechtlichen Einschränkungen zwingend bei der Produktkonfiguration in den Vertrag zu übernehmen sind.

26. Das computer-implementierte Verfahren zur Erzeugung, Bearbeitung und Verwaltung von strukturierten Datensätzen nach einem der vorhergehenden Ansprüche, bei dem Validierungsregeln vorgesehen sind, um zu prüfen, ob in dem Vertrag Werte oder -Bereiche von Attributen eingehalten werden, oder ob Eingaben in Feldern im Verhältnis zu den jeweiligen Feldformaten korrekt sind, bei dem die Validierungsregeln bei ihrer Prüfung, ob in dem Vertrag Werte oder -Bereiche von Attributen eingehalten werden, oder ob Eingaben in Feldern im Verhältnis zu den jeweiligen Feldformaten korrekt sind, als Ergebnis "OK/NOK" zurückgeben, und/oder bei dem eine oder mehrere Validierungsregeln vorgesehen sind, die zur Individualisierung eines Vertrages eine Vorauswahl und Prüfung von Produktvorlagen vornehmen, für die für einen Kunden/Partner eine Vertragsbeziehung zu eröffnen / zu modifizieren ist, und die bei ihrer Prüfung einen Ergebnissatz zurückgeben.

27. Das computer-implementierte Verfahren zur Erzeugung, Bearbeitung und Verwaltung von strukturierten Datensätzen nach einem der vorhergehenden Ansprüche, bei dem zur Individualisierung eines Vertrages eine oder mehrere Validierungsregeln zur Ermittlung einer kunden-/partnerspezifischen Voreinstellung (Default) vor oder in der Darstellung auf einer graphischen oder alphanumerischen Benutzeroberfläche vorgesehen sind, bei dem eine oder mehrere Validierungsregeln zur Prüfung der Einhaltung eines Wertes oder Wertebereichs oder eines Datensatzes zur Sicherstellung der Verarbeitbarkeit einer Basisleistung, wobei die zu prüfenden Werte/ Wertebereiche/Datensätze sind in der jeweiligen Produktvorlage vorgegeben sind.

28. Das computer-implementierte System zur Erzeugung, Bearbeitung und Verwaltung von strukturierten Datensätzen nach einem der vorhergehenden Ansprüche, bei dem die zu einem Vertrag gehörenden Daten so bewirtschaftet werden, dass jede Mutation der Daten zu jedem Zeitpunkt nachvollziehbar und rekonstruierbar ist, und bei dem die Speicherungsdauer von nicht mehr gültigen Daten des Vertrages als Attribut festgelegt ist.

29. Das computer-implementierte Verfahren zur Erzeugung, Bearbeitung und Verwaltung von strukturierten Datensätzen nach einem der vorhergehenden Ansprüche, bei dem eine Änderung eines Attributes des Vertragskopfes ein Erzeugen eines neuen Eintrages in dem Vertragskopf auslöst, bei dem wenigstens ein abgeleitetes Attribut im Vertragskopf gespeichert ist, wobei eine Änderungen eines abgeleiteten Attributes kein Erzeugen eines neuen Eintrages in dem Vertragskopf auslöst, sondern eine Aktualisierung dieses Attributs erfolgt, und/oder bei dem eine Änderung eines Attributes eines Basisleistungsvertrages ein Erzeugen eines neuen Eintrages in dem Basisleistungsvertrag auslöst und/oder eine Aktualisierung dieses Attributs im Vertragskopf erfolgt.

30. Das computer-implementierte Verfahren zur Erzeugung, Bearbeitung und Verwaltung von strukturierten Datensätzen nach einem der vorhergehenden Ansprüche, bei dem beim Erzeugen eines individualisierten Vertragskopfes und/oder eines Basisleistungsvertrages eine Referenz auf eine Produktvorlage oder eine spezifische Basisleistungen für die jeweilige Produktvorlage erzeugt wird.

31. Computerprogrammprodukt, welches dazu ausgelegt ist, das Verfahren nach einem der vorhergehenden Ansprüche auszuführen wenn es von einem Computer oder einem Computer-Netzwerk ausgeführt wird.

## Geänderte Patentansprüche

### Geänderte Patentansprüche gemäss Regel 86(2) EPÜ.

**1.** Computer-implementiertes System zur Erzeugung, Bearbeitung und Verwaltung von strukturierten Datensätzen, wobei in diesem System
- eine Computersoftwareprogramm-Komponente Vertragsmanager vorgesehen ist, um aus einem Produktvorlagenverzeichnis, in dem die Strukturen der Produktvorlagen in strukturierter Weise abgelegt sind, eine Produktvorlage zur Individualisierung aufzurufen und spezifisch zu ergänzen, indem entweder wenigstens ein vorgesetzter Wert zu übernehmen ist oder ein Wert innerhalb eines zugelassenen Bereiches auszuwählen ist, um
- ein einen Vertrag wiedergebendes individualisiertes Vertragsdokument zu erzeugen und das Anlegen dieses Vertrages in einer Datenbank und dessen technische Abwicklung anzustoßen, wobei
-- der Vertrag einen Vertragskopf und wenigstens eine Basisleistung aufweist, die aus der Produktvorlage abgeleitet sind, wobei
die Softwareprogramm-Komponente Vertragsmanager Funktionalitäten zur Bewirtschaftung der Vertragsdaten zur Verfügung stellt und alle Kunden-/Partner-relevanten Kunden-Verträge führt und verwaltet, **dadurch gekennzeichnet, dass**
- auf der Ebene der Produktvorlagen Abgabe-Regeln implementiert sind,
- eine Abgabe-Regel ein eigenständiges Objekt mit eigener Kennzeichnung und einem beschreibenden Text ist,
- die Abgabe-Regeln durch eine Regelbasis zur Verfügung gestellt werden,
- durch eine Abgaberegel bestimmt wird, welche Bedingungen zu erfüllen sind, damit einem Kunden/Partner ein Produkt mit der jeweiligen Basisleistung zugänglich gemacht wird,
- zwischen einer Abgabe-Regel und ihrer zugeordneten Basisleistung eine Beziehung hergestellt wird, und
- Abgabe-Regeln auch übergreifend über mehrere Basisleistungen einer Produktvorlage eingesetzt werden.

**2.** Das computer-implementierte System zur Erzeugung, Bearbeitung und Verwaltung von strukturierten Datensätzen nach Anspruch 1, bei dem eine Produktvorlage eine oder mehrere zwingend zu einem Produkt gehörende Basisleistungen umfasst, und eine oder mehrere ausdrücklich zu einem Produkt dazu- oder abzuwählende Basisleistungen umfassen kann.

**3.** Das computer-implementierte System zur Erzeugung, Bearbeitung und Verwaltung von strukturierten Datensätzen nach einem der vorhergehenden Ansprüche, bei dem ein Auszug vorbestimmter Vertrags-Daten in ein Vertrags-Verzeichnis zu replizieren ist.

**4.** Das computer-implementierte System zur Erzeugung, Bearbeitung und Verwaltung von strukturierten Datensätzen nach einem der vorhergehenden Ansprüche, bei dem der aus der Produktvorlage abgeleitete Vertragskopf eine Klammer für die zum Vertrag gehörenden Basisleistungsverträge bildet, und in dem Vertragskopf unterschiedliche Schlüssel gehalten werden.

**5.** Das computer-implementierte System zur Erzeugung, Bearbeitung und Verwaltung von strukturierten Datensätzen nach einem der vorhergehenden Ansprüche, bei dem jeder Basisleistungsvertrag auf den in einer Produktvorlage definierten Basisleistungen basiert.

**6.** Das computer-implementierte System zur Erzeugung, Bearbeitung und Verwaltung von strukturierten Datensätzen nach einem der vorhergehenden Ansprüche, bei dem die Abgaberegeln Alters-, Domizil-, Kundensegment-, und/oder rechtliche Einschränkungen umfassen.

**7.** Das computer-implementierte System zur Erzeugung, Bearbeitung und Verwaltung von strukturierten Datensätzen nach einem der vorhergehenden Ansprüche, bei dem die Abgaberegeln in dem Vertrag nicht zu übersteuern sind.

**8.** Das computer-implementierte System zur Erzeugung, Bearbeitung und Verwaltung von strukturierten Datensätzen nach einem der vorhergehenden Ansprüche, bei dem die Abgaberegeln mit rechtlichen Einschränkungen zwingend bei der Produktkonfiguration in den Vertrag zu übernehmen sind.

**9.** Das computer-implementierte System zur Erzeugung, Bearbeitung und Verwaltung von strukturierten Datensätzen nach einem der vorhergehenden Ansprüche, bei dem Validierungsregeln vorgesehen sind, um zu prüfen, ob in dem Vertrag Werte oder -Bereiche von Attributen eingehalten werden, oder ob Eingaben in Feldern im Verhältnis zu den jeweiligen Feldformaten korrekt sind.

**10.** Das computer-implementierte System zur Erzeugung, Bearbeitung und Verwaltung von strukturierten Datensätzen nach einem der vorhergehenden Ansprüche, bei dem die Validierungsregeln bei ihrer Prüfung, ob in dem Vertrag Werte oder -Bereiche von Attributen eingehalten werden, oder ob Eingaben in Feldern im Verhältnis zu den jeweiligen Feldformaten korrekt sind, als Ergebnis "OK/NOK" zurückgeben.

**11.** Das computer-implementierte System zur Erzeugung, Bearbeitung und Verwaltung von strukturierten Datensätzen nach einem der vorhergehenden Ansprüche, bei dem eine oder mehrere Validierungsregeln vorgesehen sind, die zur Individualisierung eines Vertrages eine Vorauswahl und Prüfung von Produktvorlagen vornehmen, für die für einen Kunden/Partner eine Vertragsbeziehung zu eröffnen / zu modifizieren ist, und die bei ihrer Prüfung einen Ergebnissatz zurückgeben.

**12.** Das computer-implementierte System zur Erzeugung, Bearbeitung und Verwaltung von strukturierten Datensätzen nach einem der vorhergehenden Ansprüche, bei dem zur Individualisierung eines Vertrages eine oder mehrere Validierungsregeln zur Ermittlung einer kunden-/partnerspezifischen Voreinstellung (Default) vor oder in der Darstellung auf einer graphischen oder alphanumerischen Benutzeroberfläche vorgesehen sind.

**13.** Das computer-implementierte System zur Erzeugung, Bearbeitung und Verwaltung von strukturierten Datensätzen nach einem der vorhergehenden Ansprüche, bei dem eine oder mehrere Validierungsregeln zur Prüfung der Einhaltung eines Wertes oder Wertebereichs oder eines Datensatzes zur Sicherstellung der Verarbeitbarkeit einer Basisleistung, wobei die zu prüfenden Werte/ Wertebereiche/Datensätze sind in der jeweiligen Produktvorlage vorgegeben sind.

**14.** Das computer-implementierte System zur Erzeugung, Bearbeitung und Verwaltung von strukturierten Datensätzen nach einem der vorhergehenden Ansprüche, bei dem die zu einem Vertrag gehörenden Daten so bewirtschaftet werden, dass jede Mutation der Daten zu jedem Zeitpunkt nachvollziehbar und rekonstruierbar ist, und bei dem die Speicherungsdauer von nicht mehr gültigen Daten des Vertrages als Attribut festgelegt ist.

**15.** Das computer-implementierte System zur Erzeugung, Bearbeitung und Verwaltung von strukturierten Datensätzen nach einem der vorhergehenden Ansprüche, bei dem eine Änderung eines Attributes des Vertragskopfes ein Erzeugen eines neuen Eintrages in dem Vertragskopf auslöst.

**16.** Das computer-implementierte System zur Erzeugung, Bearbeitung und Verwaltung von strukturierten Datensätzen nach einem der vorhergehenden Ansprüche, bei dem wenigstens ein abgeleitetes Attribut im Vertragskopf gespeichert ist, wobei eine Änderungen eines abgeleiteten Attributes kein Erzeugen eines neuen Eintrages in dem Vertragskopf auslöst, sondern eine Aktualisierung dieses Attributs erfolgt.

**17.** Das computer-implementierte System zur Erzeugung, Bearbeitung und Verwaltung von strukturierten Datensätzen nach einem der vorhergehenden Ansprüche, bei dem eine Änderung eines Attributes eines Basisleistungsvertrages ein Erzeugen eines neuen Eintrages in dem Basisleistungsvertrag auslöst und/oder eine Aktualisierung dieses Attributs im Vertragskopf erfolgt.

**18.** Das computer-implementierte System zur Erzeugung, Bearbeitung und Verwaltung von strukturierten Datensätzen nach einem der vorhergehenden Ansprüche, bei dem beim Erzeugen eines individualisierten Vertragskopfes und/oder eines Basisleistungsvertrages eine Referenz auf eine Produktvorlage oder eine spezifische Basisleistungen für die jeweilige Produktvorlage erzeugt wird.

**19.** Das computer-implementierte System zur Erzeugung, Bearbeitung und Verwaltung von strukturierten Datensätzen nach einem der vorhergehenden Ansprüche, bei dem die Softwareprogramm-Komponente Vertragsmanager zum Aufruf einer Regel eine Regel-ID sowie Eingabewerte für die Regel erhält, womit ein generischer Regeltreiber aufgerufen wird, der eine Regeltabelle liest.

**20.** Das computer-implementierte System zur Erzeugung, Bearbeitung und Verwaltung von strukturierten Datensätzen nach dem vorhergehenden Anspruch, bei dem die Regel statisch oder dynamisch ausgeführt wird.

**21.** Das computer-implementierte System zur Erzeugung, Bearbeitung und Verwaltung von strukturierten Datensätzen nach dem vorhergehenden Anspruch, bei dem der Regeltreiber
- Daten zu einer Geschäftsbeziehungs-ID und die
- Regelverwendung mit Produktvorlagen-ID liest, und
- ein Regel-Programm wird mit folgender Schnittstelle aufruft: Attribute zur Geschäftsbeziehungs-ID, und Produktvorlagen-ID, und das Regel-Programms als Ergebnis OK/NOK zurückgibt.

**22.** Computer-implementiertes Verfahren zur Erzeugung, Bearbeitung und Verwaltung von strukturierten Datensätzen, wobei
- eine Computersoftwareprogramm-Komponente Vertragsmanager aus einem Produktvorlagenverzeichnis, in dem die Strukturen der Produktvorlagen in strukturierter Weise abgelegt sind, eine Produktvorlage zur Individualisierung aufruft und spezifisch ergänzt, indem entweder wenigstens ein vorgesetzter Wert zu übernehmen ist oder ein Wert innerhalb eines zugelassenen Bereiches auszuwählen ist, um
- ein einen Vertrag wiedergebendes individualisiertes Vertragsdokument zu erzeugen und das Anlegen dieses Vertrages in einer Datenbank und dessen technische Abwicklung anzustoßen, wobei
-- der Vertrag einen Vertragskopf und wenigstens eine Basisleistung aufweist, die aus der Produktvorlage abgeleitet sind, wobei
- die Softwareprogramm-Komponente Vertragsmanager Funktionalitäten zur Bewirtschaftung der Vertragsdaten zur Verfügung stellt und alle Kunden-/Partner-relevanten Kunden-Verträge führt und verwaltet, **dadurch gekennzeichnet, dass**
- - auf der Ebene der Produktvorlagen Abgabe-Regeln implementiert sind,
- eine Abgabe-Regel ein eigenständiges Objekt mit eigener Kennzeichnung und einem beschreibenden Text ist,
- die Abgabe-Regeln durch eine Regelbasis zur Verfügung gestellt werden,
- durch eine Abgaberegel bestimmt wird, welche Bedingungen zu erfüllen sind, damit einem Kunden/Partner ein Produkt mit der jeweiligen Basisleistung zugänglich gemacht wird,
- zwischen einer Abgabe-Regel und ihrer zugeordneten Basisleistung eine Beziehung hergestellt wird, und
- Abgabe-Regeln auch übergreifend über mehrere Basisleistungen einer Produktvorlage eingesetzt werden.

**23.** Das computer-implementierte Verfahren zur Erzeugung, Bearbeitung und Verwaltung von strukturierten Datensätzen nach Anspruch 19, bei dem eine Produktvorlage eine oder mehrere zwingend zu einem Produkt gehörende Basisleistungen umfasst, und eine oder mehrere ausdrücklich zu einem Produkt dazu- oder abzuwählende Basisleistungen umfassen kann.

**24.** Das computer-implementierte Verfahren zur Erzeugung, Bearbeitung und Verwaltung von strukturierten Datensätzen nach einem der vorhergehenden Ansprüche, bei dem ein Auszug vorbestimmter Vertrags-Daten in ein Vertrags-Verzeichnis zu replizieren ist, bei dem der aus der Produktvorlage abgeleitete Vertragskopf eine Klammer für die zum Vertrag gehörenden Basisleistungsverträge bildet, und in dem Vertragskopf unterschiedliche Schlüssel gehalten werden.

**25.** Das computer-implementierte Verfahren zur Erzeugung, Bearbeitung und Verwaltung von strukturierten Datensätzen nach einem der vorhergehenden Ansprüche, bei dem jeder Basisleistungsvertrag auf den in einer Produktvorlage definierten Basisleistungen basiert.

**26.** Das computer-implementierte Verfahren zur Erzeugung, Bearbeitung und Verwaltung von strukturierten Datensätzen nach einem der vorhergehenden Ansprüche, bei dem jeder Basisleistung jeweils wenigstens eine Abgaberegel zugeordnet ist, wobei vorzugsweise in dem Vertrag durch Abgaberegeln bestimmt wird, welche Bedingungen zu erfüllen sind, damit einem Kunden/Partner ein Produkt mit der jeweiligen Basisleistung zugänglich gemacht wird, und/oder bei dem die Abgaberegeln Alters-, Domizil-, Kundensegment-, und/oder rechtliche Einschränkungen umfassen, und/oder bei dem die Abgaberegeln in dem Vertrag nicht zu übersteuern sind, und/oder bei dem die Abgaberegeln mit rechtlichen Einschränkungen zwingend bei der Produktkonfiguration in den Vertrag zu übernehmen sind.

**27.** Das computer-implementierte Verfahren zur Erzeugung, Bearbeitung und Verwaltung von strukturierten Datensätzen nach einem der vorhergehenden Ansprüche, bei dem Validierungsregeln vorgesehen sind, um zu prüfen, ob in dem Vertrag Werte oder -Bereiche von Attributen eingehalten werden, oder ob Eingaben in Feldern im Verhältnis zu den jeweiligen Feldformaten korrekt sind, bei dem die Validierungsregeln bei ichrer Prüfung, ob in dem Vertrag Werte oder -Bereiche von Attributen eingehalten werden, oder ob Eingaben in Feldern im Verhältnis zu den jeweiligen Feldformaten korrekt sind, als Ergebnis "OK/NOK" zurückgeben, und/oder bei dem eine oder mehrere Validierungsregeln vorgesehen sind, die zur Individualisierung eines Vertrages eine Vorauswahl und Prüfung von Produktvorlagen vornehmen, für die für einen Kunden/Partner eine Vertragsbeziehung zu eröffnen / zu modifizieren ist, und die bei ihrer Prüfung einen Ergebnissatz zurückgeben.

**28.** Das computer-implementierte Verfahren zur Erzeugung, Bearbeitung und Verwaltung von strukturierten Datensätzen nach einem der vorhergehenden Ansprüche, bei dem zur Individualisierung eines Vertrages eine oder mehrere Validierungsregeln zur Ermittlung einer kunden-/partnerspezifischen Voreinstellung (Default) vor oder in der Darstellung auf einer graphischen oder alphanumerischen Benutzeroberfläche vorgesehen sind, bei dem eine oder mehrere Validierungsregeln zur Prüfung der Einhaltung eines Wertes oder Wertebereichs oder eines Datensatzes zur Sicherstellung der Verarbeitbarkeit einer Basisleistung, wobei die zu prüfenden Werte/ Wertebereiche/ Datensätze sind in der jeweiligen Produktvorlage vorgegeben sind.

**29.** Das computer-implementierte System zur Erzeugung, Bearbeitung und Verwaltung von strukturierten Datensätzen nach einem der vorhergehenden Ansprüche, bei dem die zu einem Vertrag gehörenden Daten so bewirtschaftet werden, dass jede Mutation der Daten zu jedem Zeitpunkt nachvollziehbar und rekonstruierbar ist, und bei dem die Speicherungsdauer von nicht mehr gültigen Daten des Vertrages als Attribut festgelegt ist.

**30.** Das computer-implementierte Verfahren zur Erzeugung, Bearbeitung und Verwaltung von strukturierten Datensätzen nach einem der vorhergehenden Ansprüche, bei dem eine Änderung eines Attributes des Vertragskopfes ein Erzeugen eines neuen Eintrages in dem Vertragskopf auslöst, bei dem wenigstens ein abgeleitetes Attribut im Vertragskopf gespeichert ist, wobei eine Änderungen eines abgeleiteten Attributes kein Erzeugen eines neuen Eintrages in dem Vertragskopf auslöst, sondern eine Aktualisierung dieses Attributs erfolgt, und/oder bei dem eine Änderung eines Attributes eines Basisleistungsvertrages ein Erzeugen eines neuen Eintrages in dem Basisleistungsvertrag auslöst und/oder eine Aktualisierung dieses Attributs im Vertragskopf erfolgt.

**31.** Das computer-implementierte Verfahren zur Erzeugung, Bearbeitung und Verwaltung von strukturierten Datensätzen nach einem der vorhergehenden Ansprüche, bei dem beim Erzeugen eines individualisierten Vertragskopfes und/oder eines Basisleistungsvertrages eine Referenz auf eine Produktvorlage oder eine spezifische Basisleistungen für die jeweilige Produktvorlage erzeugt wird.

**32.** Das computer-implementierte Verfahren zur Erzeugung, Bearbeitung und Verwaltung von strukturierten Datensätzen nach einem der vorhergehenden Ansprüche, bei dem die Softwareprogramm-Komponente Vertragsmanager zum Aufruf einer Regel eine Regel-ID sowie Eingabewerte für die Regel erhält, womit ein generischer Regeltreiber aufgerufen wird, der eine Regeltabelle liest.

**33.** Das computer-implementierte Verfahren zur Erzeugung, Bearbeitung und Verwaltung von strukturierten Datensätzen nach dem vorhergehenden Anspruch, bei dem die Regel statisch oder dynamisch ausgeführt wird.

**34.** Das computer-implementierte Verfahren zur Erzeugung, Bearbeitung und Verwaltung von strukturierten Datensätzen nach dem vorhergehenden Anspruch, bei dem der Regeltreiber
- Daten zu einer Geschäftsbeziehungs-ID und die
- Regelverwendung mit Produktvorlagen-ID liest, und
- ein Regel-Programm wird mit folgender Schnittstelle aufruft: Attribute zur Geschäftsbeziehungs-ID, und Produktvorlagen-ID, und das Regel-Programms als Ergebnis OK/NOK zurückgibt.

**35.** Computerprogrammprodukt, welches dazu ausgelegt ist, das Verfahren nach einem der vorhergehenden Ansprüche auszuführen wenn es von einem Computer oder einem Computer-Netzwerk ausgeführt wird.
